# EUROPÄISCHE PATENTANMELDUNG

(11) **EP 2 674 636 A1**
(43) Veröffentlichungstag der Anmeldung: **18.12.2013**
(21) Anmeldenummer: 12171484.4
(22) Anmeldetag: 11.06.2012
(51) Int. Cl.: F16D 7/02

(54) **Welle-Nabeverbindung**

(71) Anmelder: Siemens Aktiengesellschaft, 80333 München (DE)
(72) Erfinder: Smiataz, Ewald, 48691 Vreden (DE)

(57) **Zusammenfassung**

Die Erfindung betrifft eine Welle-Nabeverbindung. Die Welle-Nabeverbindung umfasst ein formschlüssig mit einem Wellenende (1) verbindbares Nabenelement (2) mit einem Außenkonus (21). Die Welle-Nabeverbindung umfasst außerdem ein ein Anschlusselement (4) aufweisendes Klemmelement (3) mit einem Innenkonus (31). Eine Kontaktfläche zwischen dem Außenkonus (21) und dem Innenkonus (31) bildet eine Rutschfläche (23) aus. Durch eine axiale Verschiebung des Außenkonus (21) relativ zum Innenkonus (31) ist ein durch die Rutschfläche (23) zwischen dem Nabenelement (2) und dem Klemmelement (3) übertragbares Drehmoment einstellbar.

## Beschreibung

Die Erfindung betrifft eine Welle-Nabeverbindung und eine Verbindung einer antreibenden Welle mit einer angetriebenen Welle mittels einer Welle-Nabeverbindung.

Es sind Welle-Nabeverbindungen bekannt, die ein Drehmoment durch Reibung übertragen und bei Überlast mit einem eingestellten Drehmoment durchrutschen. Eine solche als Rutschkupplung oder Rutschnabe bezeichnete Welle-Nabeverbindung dient als Überlastschutz für kurzzeitig auftretende, insbesondere hochfrequente Drehmomentstöße. Auf diese Weise werden die verbundenen Maschinen vor durch die Drehmomentstöße verursachten Überlastschäden geschützt.

Eine derartige Rutschkupplung ist bei der in EP 1 380 763 B1 offenbarten Welle-Nabeverbindung dadurch realisiert, dass die Welle-Nabeverbindung einen Anschlussflansch und ein an diesem befestigbares Klemmelement, insbesondere einen Klemmring, aufweist, wobei mittels des Klemmelements ein dem Anschlussflansch zugeordnetes Wellenende unter Zwischenschaltung einer ein Rutschmoment aufnehmenden Buchse kraftschlüssig mit dem Anschlussflansch verbindbar ist. Dabei liegt eine Rutschfläche zwischen der zylindrischen Buchse und einer zylindrischen Gegenfläche.

Als Material für die Buchse wird häufig Bronze gewählt, da Bronze gute Gleiteigenschaften bietet und sehr verschleißfest ist. Allerdings ist Bronze relativ teuer. Außerdem können Beschaffungsprobleme und Lieferzeiten für eine passende Bronzebuchse zu unerwünschten Stillstandszeiten von Maschinen führen.

Der Erfindung liegt davon ausgehend die Aufgabe zugrunde, eine verbesserte Welle-Nabeverbindung anzugeben, die als Rutschkupplung verwendbar ist.

Diese Aufgabe wird erfindungsgemäß durch eine Welle-Nabeverbindung mit den in Anspruch 1 angegebenen Merkmalen gelöst.

Die Welle-Nabeverbindung umfasst ein Nabenelement und ein Klemmelement, insbesondere einen Klemmring. Das Nabenelement weist einen einem Außenkonus auf und ist formschlüssig mit einem Wellenende verbindbar. Das Klemmelement weist einen Innenkonus und ein Anschlusselement auf. Eine Kontaktfläche zwischen dem Außenkonus und dem Innenkonus bildet eine Rutschfläche aus. Durch eine axiale Verschiebung des Außenkonus relativ zum Innenkonus ist ein Drehmoment, das durch die Rutschfläche zwischen dem Nabenelement und dem Klemmelement übertragbar ist, einstellbar ist.

Die erfindungsgemäße Lösung zeichnet sich dadurch aus, dass für die Rutschkupplung keine Gleitbuchse wie eine Bronzebuchse erforderlich ist. Das wird dadurch möglich, dass die Rutschfläche auf die Kegelflächen des Klemmelements bzw. des Nabenelements verlegt wird.

Ein Vorteil der Erfindung ist der Verzicht auf die Bronzehülsen, und damit eine erhebliche Material- und Kostenersparnis sowie eine Zeitersparnis, da Beschaffungsprobleme und Lieferzeiten entfallen. Alle Komponenten der Rutschnabe können aus vorhandenem Standardmaterial gefertigt werden.

Bei der vorliegenden Erfindung kann eine axiale Sicherung der beweglichen Komponenten ohne zusätzliche Bauteile erfolgen. Dadurch ergeben sich Vorteile gegenüber bekannten Welle-Nabeverbindungen, bei welchen ein zusätzlicher Haltering für eine axiale Sicherung gegen ein Verschieben notwendig ist.

Weitere bevorzugte Ausführungsformen gehen aus den Unteransprüchen hervor.

Es ist möglich, dass für das Klemmelement und das Nabenelement eine Werkstoffkombination gewählt wird, welche zusätzliche Maßnahmen zur Schmierung überflüssig macht. Hierbei ist insbesondere eine Paarung eines weichen Werkstoffs mit einem harten Werkstoff vorteilhaft.

Es ist aber auch möglich, dass auf den Innenkonus und/oder den Außenkonus eine Gleitbeschichtung aufgebracht ist. Von Vorteil ist dabei, dass die Wirkung der Rutschfläche verbessert und ein Verschleiß der aufeinander gleitenden Flächen vermindert wird. Die Gleitschicht kann auf folgende Arten ausgeführt sein: als Gleitlack, als eingebrannter Gleitlack, als eine Oberflächenschicht aus Polymeren wie z.B. PTFE (= Polytetrafluorethylen), welche durch Lackieren, Bestreichen, Umspritzen oder Aufspritzen aufgetragen ist, als ein Schichtauftrag durch CVD (= Chemical Vapour Deposition), als ein Schichtauftrag durch PVD (= Physical Vapour Deposition), als eine galvanisch aufgebrachte Schicht, als eine thermisch aufgespritzte Schicht, als eine aufgeklebte oder aufgeschrumpfte Folie, als eine durch Fetten oder Ölen erzeugte Schicht.

Alternativ kann die Gleitschicht auch durch eine poröse Oberflächenstruktur ausgebildet werden, in welcher ein Gleitmittel z.B. flüssig enthalten ist und für die Schmierung sorgt.

Gemäß einer bevorzugten Ausführungsform der Erfindung umfasst die Welle-Nabeverbindung ein Spannmittel, mit welchem das Klemmelement relativ zum Nabenelement verschiebbar ist. Das Spannmittel kann eine Schraube, insbesondere eine Maschinenschraube mit einem Sechskantkopf, sein. Von Vorteil, dabei ist, dass die axiale Verschiebung des Außenkonus relativ zum Innenkonus mit einem einfachen Schraubwerkzeug wie einem Gabelschlüssel erzielbar ist.

Gemäß einer bevorzugten Ausführungsform der Erfindung umfasst die Welle-Nabeverbindung ein Halteelement, welches an dem Nabenelement in Anlage gebracht werden kann und an welchem das Spannmittel abstützbar ist. Das Halteelement kann z.B. als ein Haltering ausgebildet sein. Von Vorteil dabei ist, dass durch das Halteelement ein definierter Anzug einer Spannschraube, d.h. ein definierter Pressdruck auf die Rutschfläche, aufgebracht und somit ein Rutsch-Drehmoment genau eingestellt werden kann. Zudem sichert ein zum Verspannen des Klemmelements als Gegenelement vorgesehenes Halteelement die Rutschnabe axial auf der Welle.

Gemäß einer bevorzugten Ausführungsform der Erfindung ist das Haltelement zum Schutz der Rutschfläche vor einer Verschmutzung, z.B. durch Flüssigkeiten oder Staub, geeignet. Vorzugsweise deckt das Halteelement die Rutschfläche auf einer Seite der Welle-Nabeverbindung völlig ab.

Die Aufgabe wird auch durch eine Verbindung einer antreibenden Welle und einer angetriebenen Welle mit einer der oben beschriebenen Welle-Nabeverbindungen gelöst.

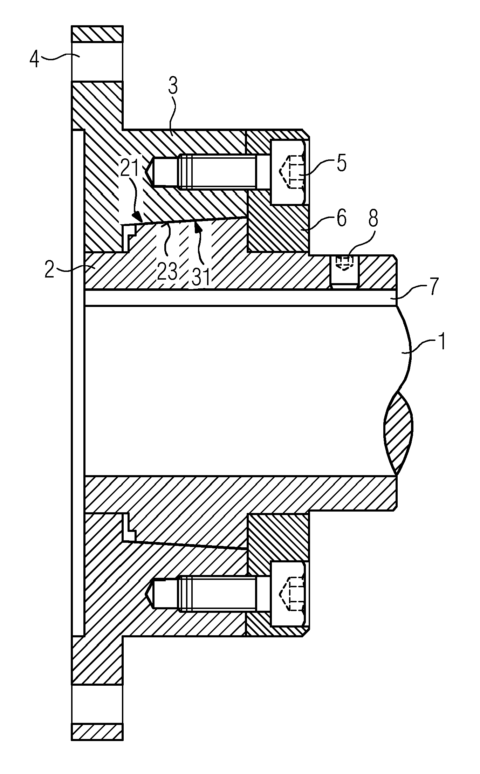

Im Folgenden wird die Erfindung anhand eines Ausführungsbeispiels unter Zuhilfenahme der beiliegenden Zeichnung erläutert.

Die Abbildung zeigt einen axialen Schnitt einer erfindungsgemäßen Welle-Nabeverbindung an einem Ende einer antreibenden Welle 1. Die Welle-Nabeverbindung umfasst eine als Nabenelement dienende Nabe 2, welches auf das Wellenende aufgeschoben und mittels einer Passfederverbindung 7 drehfest mit dem Wellenende 1 verbunden ist. Die Nabe 2 weist auf seinem von der Welle 1 abgewandten, äußeren Umfang einen Außenkonus 21 auf. In einer radial verlaufenden Bohrung 8 der Nabe 2 ist eine Stellschraube zur axialen Sicherung der Nabe 2 auf der Welle 1 eingesetzt.

Die Welle-Nabeverbindung umfasst außerdem einen als Klemmelement dienenden Klemmring 3, welcher die Nabe 2 radial umschließt. Der Klemmring 3 weist auf seinem der Welle 1 zugewandten, inneren Umfang einen Innenkonus 31 auf, welcher zu dem Außenkonus 21 der Nabe 2 korrespondierend ausgeformt ist. Der Klemmring 3 weist außerdem einen radial abstehenden Anschlussflansch 4 auf, der als Anschlusselement dient und in dem vorliegenden Ausführungsbeispiel axial verlaufende Durchgangsbohrungen aufweist.

Aufgabe der Welle-Nabeverbindung ist es, ein begrenztes Drehmoment von der antreibenden Welle 1 und somit der Nabe 2, welche mittels der Passfederverbindung 7 drehfest mit der antreibenden Welle 1 verbunden ist, auf den Klemmring 3 und somit eine nicht dargestellte angetriebene Welle, welche mittels des Anschlussflansches 4 drehfest mit dem Klemmring 3 verbunden ist, zu übertragen.

Der Klemmring 3 ist mit seinem Innenkonus 31 so über den Außenkonus 21 der Nabe 2 geschoben, dass sich der Außenkonus 21 und der Innenkonus 31 entlang einer Kontaktfläche 23 einander berühren. Diese Kontaktfläche 23 zwischen dem Außenkonus 21 und dem Innenkonus 31 bildet eine Rutsch- bzw. Gleitfläche. Es ist möglich, dass auf dem Außenkonus 21 und/oder dem Innenkonus 31 eine Gleitschicht appliziert ist.

An einem durch eine radiale Kante der Nabe 2 gebildeten Absatz liegt ein als Halteelement dienender Haltering 6 an. Der Haltering 6 schützt als mechanische Abdeckung die Rutschfläche 23 gegen Partikel, die in axialer Richtung auf den Haltering 6 treffen. In dem Haltering 6 sind über seinen Umfang verteilt mehrere axial verlaufende Durchgangsbohrungen angeordnet. Von der Seite des Halterings 6 her sind durch die Durchgangsöffnungen hindurch Spannschrauben 5 in axial mit den Durchgangsbohrungen fluchtende Gewindebohrungen in den Klemmring 3 eingeschraubt. Dabei stützen sich die Schraubenköpfe der Spannschrauben 5 an dem Haltering 6 ab, welcher sich seinerseits an dem Absatz der Nabe 2 abstützt.

Die Nabe 2, der Klemmring 3, der Haltering 6 und die Spannschrauben 5 bilden zusammen einen Spannsatz. Durch ein Anziehen der Spannschrauben 5 wird der Außenkonus 21 der Nabe 2 axial relativ zum Innenkonus 31 des Klemmrings 3 verschoben und somit gegeneinander verspannt. Durch die kegelförmige Ausbildung der Nabe 2 an ihrer dem Klemmring 3 zugewandten Außenfläche 21 wird beim Anzug der Klemmschrauben 5 ein Kraftschluss des Klemmringes 3 gegen die Nabe 2 erreicht.

Durch diese Verspannung von Nabe 2 und Klemmring 3 ist der Reibschluss zwischen den kegeligen Flächen von Außenkonus 21 und Innenkonus 31 und somit ein durch die Rutschfläche 23 von der Nabe 2 auf den Klemmring 3 übertragbares Drehmoment einstellbar.

Im Falle eines auftretenden Kurzschlussmomentes in Folge von Überlast kann die Nabe 2 entlang der Rutschfläche 23 unter dem Klemmring 3 durchrutschen. Hierdurch wird ein "Fressen" des Klemmrings 3 auf der Nabe 2 vermieden. Dabei kann die Höhe des Rutschmomentes, welches im Überlastfall von der Rutschfläche 23 aufzunehmen ist, voreingestellt werden. Die Genauigkeit der Voreinstellung beträgt etwa 10%. Dabei hängt die Streuung des Rutschmomentes ab von den tatsächlichen Toleranzen der Nabe 2 und des Klemmrings 3.

Obwohl die Erfindung im Detail durch die bevorzugten Ausführungsbeispiele näher illustriert und beschrieben wurde, so ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. Welle-Nabeverbindung, umfassend ein formschlüssig mit einem Wellenende (1) verbindbares Nabenelement (2) mit einem Außenkonus (21) und ein ein Anschlusselement (4) aufweisendes Klemmelement (3) mit einem Innenkonus (31), wobei eine Kontaktfläche zwischen dem Außenkonus (21) und dem Innenkonus (31) eine Rutschfläche (23) ausbildet und durch eine axiale Verschiebung des Außenkonus (21) relativ zum Innenkonus (31) ein durch die Rutschfläche (23) zwischen dem Nabenelement (2) und dem Klemmelement (3) übertragbares Drehmoment einstellbar ist.

2. Welle-Nabeverbindung nach Anspruch 1, wobei auf den Innenkonus (31) und/oder den Außenkonus (21) eine Gleitbeschichtung aufgebracht ist.

3. Welle-Nabeverbindung nach Anspruch 1 oder 2, umfassend ein Spannmittel (5), mit welchem das Klemmelement (3) relativ zum Nabenelement (2) verschiebbar ist.

4. Welle-Nabeverbindung nach Anspruch 3, umfassend ein an das Nabenelement (2) anlegbares Halteelement (6), an welchem das Spannmittel (5) abstützbar ist.

5. Welle-Nabeverbindung nach Anspruch 4, wobei das Haltelement (6) zum Schutz der Rutschfläche (23) vor einer Verschmutzung geeignet ist.

6. Verbindung einer antreibenden Welle und einer angetriebenen Welle mit einer Welle-Nabeverbindung nach einem der vorhergehenden Ansprüche.
